# EUROPEAN PATENT APPLICATION

(11) **EP 2 796 323 A1**
(43) Date of publication of application: **29.10.2014**
(21) Application number: 11877940.4
(22) Date of filing: 21.12.2011
(51) Int. Cl.: B60Q 1/44

(54) **STOP LAMP DEVICE**

(71) Applicant: TOYOTA JIDOSHA KABUSHIKI KAISHA, Toyota-shi, Aichi-ken, 471-8571 (JP)
(72) Inventor: SATO, Taiko, Toyota-shi Aichi 471-8571 (JP); IZUMIKAWA, Iwao, Toyota-shi Aichi 471-8571 (JP)
(74) Representative: TBK
(86) International application number: PCT/JP2011/079711
(87) International publication number: WO 2013/094040

(57) **Abstract**

A stop lamp system includes a control apparatus that controls a turn-on state of a stop lamp based on a turned-on/off state of a stop lamp switch in conjunction with an operation of a brake pedal, a turned-on/off state of a stop lamp turn-on request signal and a turned-on/off state of a stop lamp turn-off request signal. When the stop lamp turn-on request signal is in the turned-on state and the stop lamp turn-off request signal is in the turned-on state, the control apparatus gives priority to the turned-on state of the stop lamp turn-on request signal and turns on the stop lamp.

## Description

### TECHNICAL FIELD

The present invention relates to a stop lamp system.

### BACKGROUND ART

A technology is known in which, when sudden braking is being carried out, stop lamps are blinked (for example, see Patent Reference No. 1). In this configuration, when sudden braking is being carried out, a blink signal (such a signal that an on (high-level)/off (low-level) state is changed at 4 Hz) and an output of a stop lamp switch are input to an AND gate and thus stop lamps are blinked.

### PRIOR ART REFERENCE

### PATENT REFERENCE

Patent Reference No. 1: Japanese Laid-Open Patent Application No. 2010-030376

### SUMMARY OF THE INVENTION

### PROBLEM TO BE SOLVED BY THE INVENTION

However, in the configuration of Patent Reference No. 1, when the blink signal is fixed to be turned off due to an open, short circuit or the like of a device in an internal circuit, a lamp no-turn-on mode occurs in which the stop lamps cannot be turned on even when the stop lamp switch is normal. Thus, a lamp no-turn-on mode occurs due to a single failure where the blink signal is fixed to be turned off.

Therefore, the present invention has an objective to provide a stop lamp system in which an occurrence of a lamp no-turn-mode due to a single failure is prevented.

### MEANS FOR SOLVING THE PROBLEM

According to one aspect of the present invention, a stop lamp system is provided including a control apparatus that controls a turn-on state of a stop lamp based on a turned-on/off state of a stop lamp switch in conjunction with an operation of a brake pedal, a turned-on/off state of a stop lamp turn-on request signal and a turned-on/off state of a stop lamp turn-off request signal.

The stop lamp system is characterized in that when the stop lamp turn-on request signal has a turned-on state and the stop lamp turn-off request signal has a turned-on state, the control apparatus gives priority to the turned-on state of the stop lamp turn-on request signal and turns on the stop lamp.

### ADVANTAGEOUS EFFECT OF THE INVENTION

According to the present invention, it is possible to obtain a stop lamp system in which an occurrence of a lamp no-turn-mode due to a single failure is prevented.

### BRIEF DESCRIPTION OF DRAWINGS

FIG. 1 shows a relevant configuration in a stop lamp system according to one embodiment;
FIG. 2 shows waveforms of various signals (normal time) in a comparison example and the present embodiment at a time of normal braking operation;
FIG. 3 shows waveforms of various signals (turn-off request fixed to be turned on) in a comparison example and the present embodiment at a time of normal braking operation;
FIG. 4 shows waveforms of various signals (normal time) in a comparison example and the present embodiment at a time of turn-on control;
FIG. 5 shows waveforms of various signals (turn-off request fixed to be turned on) in a comparison example and the present embodiment at a time of turn-on control;
FIG. 6 shows waveforms of various signals (normal time) in a comparison example and the present embodiment at a time of blink control;
FIG. 7 shows waveforms of various signals (turn-off request fixed to be turned on) in a comparison example and the present embodiment at a time of blink control; and
FIG. 8 shows one example of an internal configuration of a lamp driving relay 30.

### MODE FOR CARRYING OUT THE INVENTION

Below, the best mode for carrying out the present invention will be described with reference to drawings.

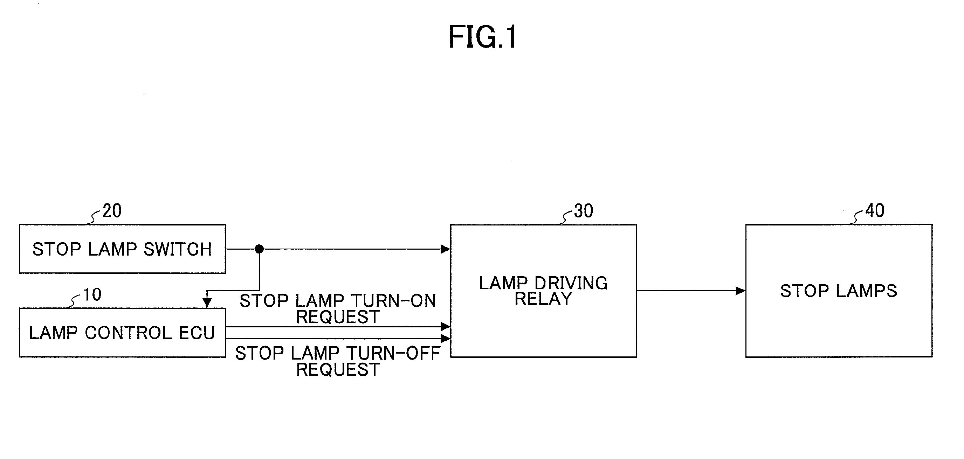

FIG. 1 shows a relevant configuration in a stop lamp system according to one embodiment. The stop lamp system 1 includes a lamp control ECU (Electronic Control Unit) 10 as a center and further includes a stop lamp switch 20, a lamp driving relay 30 and stop lamps (brake lamps) 40.

The lamp control ECU 10 includes, for example, a CPU, a ROM storing a control program, a readable and writeable RAM storing calculation results and so forth, a timer, a counter, an input interface, an output interface and so forth.

The lamp control ECU 10 generates a stop lamp turn-on request signal. The stop lamp turn-on request signal is a signal that comes to have a turned-on state while requiring a turned-on state of the stop lamps 40. The stop lamp turn-on request signal is input to the lamp driving relay 30. According to a predetermined rule, the lamp control ECU 10 switches the turned-on/off state of the stop lamp turn-on request signal. For example, basically (except for an exception described later), the lamp control ECU 10 causes the stop lamp turn-on request signal to have a turned-on state in synchronization with a turned-on state of the stop lamp switch 20. Further, in a case where such a function is provided that a brake system (not shown) is automatically operated and a brake force can be generated regardless of presence/absence of an operation of a brake pedal by the driver (even when the driver does not operate the brake pedal) such as ACC (Auto-Cruise Control) or HAC (Hill start Assistance Control), the stop lamp turn-on request signal is caused to have a turned-on state while the brake force is being generated. Further, when the brake system is operated in response to the driver's braking operation and predetermined sudden braking is being carried out, the lamp control ECU 10 changes the stop lamp turn-on request signal between a turned-on state and a turned-off state every predetermined period of time. That is, when predetermined sudden braking is being carried out, the lamp control ECU 10 generates the stop lamp turn-on request signal in a form of a pulse signal which has its state changed between turned on and turned off at a predetermined frequency.

The lamp control ECU 10 generates a stop lamp turn-off request signal. The stop lamp turn-off request signal is a signal that comes to have a turned-on state while requiring a turned-off state of the stop lamps 40. The stop lamp turn-off request signal is input to the lamp driving relay 30. According to a predetermined rule, the lamp control ECU 10 switches the turned-on/off state of the stop lamp turn-off request signal. For example, when the brake system is operated in response to the driver's braking operation and predetermined sudden braking is being carried out, the lamp control ECU 10 changes the stop lamp turn-off request signal between a turned-on state and a turned-off state every predetermined period of time. That is, when predetermined sudden braking is being carried out, the lamp control ECU 10 generates the stop lamp turn-off request signal in a form of a pulse signal which has its state changed between turned on and turned off at a predetermined frequency. In this case, the switching period of time for turning on and off the stop lamp turn-off request signal is the same as the switching period of time for turning on and off the stop lamp turn-on request signal. However, the phase of turning on and off of the stop lamp turn-off request signal is made opposite to the phase of turning on and off of the stop lamp turn-on request signal. That is, the turned-on/off state of the stop lamp turn-off request signal is changed in such a manner that the stop lamp turn-off request signal comes to have a turned-off state when the stop lamp turn-on request signal has a turned-on state and comes to have a turned-on state when the stop lamp turn-on request signal has a turned-off state. Thereby, as will be described later, at a time of sudden braking, blinking of the stop lamps 40 is implemented. Note that although the switching period of time for turning on and off of the stop lamp turn-off request signal (the switching period of time for turning on and off of the stop lamp turn-on request signal) is arbitrary, it can be on the order of, for example, 3 to 4 Hz.

Presence/absence of predetermined sudden braking can be detected by a brake ECU (not shown) connected to the lamp control ECU 10, or can be detected by the lamp control ECU 10 itself. In the former case, the brake ECU determines whether predetermined sudden braking occurs according to a given sudden braking determination condition, and when determining that predetermined sudden braking is being carried out, notifies the lamp control ECU 10 of this matter. The lamp control ECU 10 receives the notification and, during the predetermined sudden braking being carried out, changes the stop lamp turn-on request signal and the stop lamp turn-off request signal between a turned-on state and a turned-off state every predetermined period of time as described above.

Note that the sudden braking determination condition is diverse and any condition can be used. For example, predetermined sudden braking can be detected based on outputs of a vehicle speed sensor and an acceleration sensor and an operation amount of the brake pedal. More specifically, it can be determined that predetermined sudden braking is being carried out when the brake pedal is operated and also the deceleration detected by the acceleration sensor exceeds a predetermined deceleration amount (for example, a value in a range of 6 to 8 m/s²) under the condition where the vehicle speed detected by the vehicle speed sensor is greater than or equal to a predetermined vehicle speed (for example, a value in a range of 50 to 60 km/h). Note that the state of determining that predetermined sudden braking is being carried out can be canceled (i.e., operations of changing the stop lamp turn-on request signal and the stop lamp turn-off request signal between a turned-on state and a turned-off state every predetermined period of time can be stopped) when the deceleration of the vehicle becomes less than or equal to the predetermined deceleration (the value in the range of 3 to 5 m/s²) or a hazard lamp is turned on.

The stop lamp switch 20 is a switch having its turned-on/off state changed depending on presence/absence of a braking operation performed by the driver. For example, the stop lamp switch 20 can be a switch having its turned-on/off state changed mechanically in conjunction with the movement of the brake pedal. Note that a turned-on state of the stop lamp switch 20 corresponds to a state where a braking operation performed by the driver is being performed (a state where the brake pedal is pressed) and a turned-off state of the stop lamp switch 20 corresponds to a state where a braking operation performed by the driver is not being performed. As shown in FIG. 1, the stop lamp switch 20 is connected with the lamp control ECU 10 and the lamp driving relay 30. That is, the turned-on/off state of the stop lamp switch 20 is input to the lamp control ECU 10 and the lamp driving relay 30.

The lamp driving relay 30 generates an output (relay output) depending on the turned-on/off state of the stop lamp switch 20, the turned-on/off state of the stop lamp turn-on request signal and the turned-on/off state of the stop lamp turn-off request signal. The lamp driving relay 30 generates a relay output in such a manner that a turned-on state of the stop lamp turn-on request signal is given preference over a turned-off state of the stop lamp turn-off request signal. That is, the lamp driving relay 30 generates a relay output that turns on the stop lamps 40 when the stop lamp turn-on request signal has a turned-on state and also the stop lamp turn-off request signal has a turned-on state. Further, the lamp driving relay 30 generates a relay output in such a manner that a turned-on state of the stop lamp turn-off request signal is given preference over a turned-on state of the stop lamp switch 20. That is, the lamp driving relay 30 generates a relay output that turns off the stop lamps 40 when the stop lamp turn-off request signal has a turned-on state and also the stop lamp switch 20 has a turned-on state. One example of the internal configuration of the lamp driving relay 30 will be described later.

The stop lamps 40 are placed left and right at a rear part of the vehicle. The stop lamps 40 can include a high mounted stop lamp(s). The stop lamps 40 have their turn-on states changed based on the relay output from the lamp driving relay 30. The stop lamps 40 are turned on when the relay output from the lamp driving relay 30 has a turned-on state and are turned off when the relay output from the lamp driving relay 30 has a turned-off state.

By the above-mentioned configuration, the stop lamp system 1 has a configuration such that an occurrence of a lamp no-turn-on mode due to a single failure is prevented.

Next, in comparison with a comparison example, basic operations (operations at a normal time) and operations at a time of failure in the stop lamp system 1 according to the present embodiment will be described and a principle that a lamp no-turn-on mode does not occur due to a single failure will be described.

Here, as a failure mode, the stop lamp turned-off request signal being fixed to be turned on (a failure mode of a turned-on state being kept unchanged) that causes a lamp no-turn-on mode is assumed. Note that, being fixed to be turned on can occur typically due to opening or short-circuiting in a device included in an internal circuit of the lamp control ECU 10, a disconnection of a signal wire (harness) for the stop lamp turn-off request signal, or the like.

In the comparison example, similar to the present embodiment, the turned-on and/off state of the relay output of the lamp driving relay is changed based on the turned-on/off state of the stop lamp switch 20, the turned-on/off state of the stop lamp turn-on request signal and the turned-on/off state of the stop lamp turn-off request signal. However, in the comparison example, the stop lamp turn-on request signal is used only for control of a brake system being automatically operated to generate a brake force such as ACC or HAC and is not used (does not come to have a turned-on state) at a time of normal braking operation or in a state of sudden braking. Accordingly, in the comparison example, a turned-on state of the stop lamp turn-off request signal is given preference over a turned-on state of the stop lamp switch and a turned-on state of the stop lamp turn-on request signal.

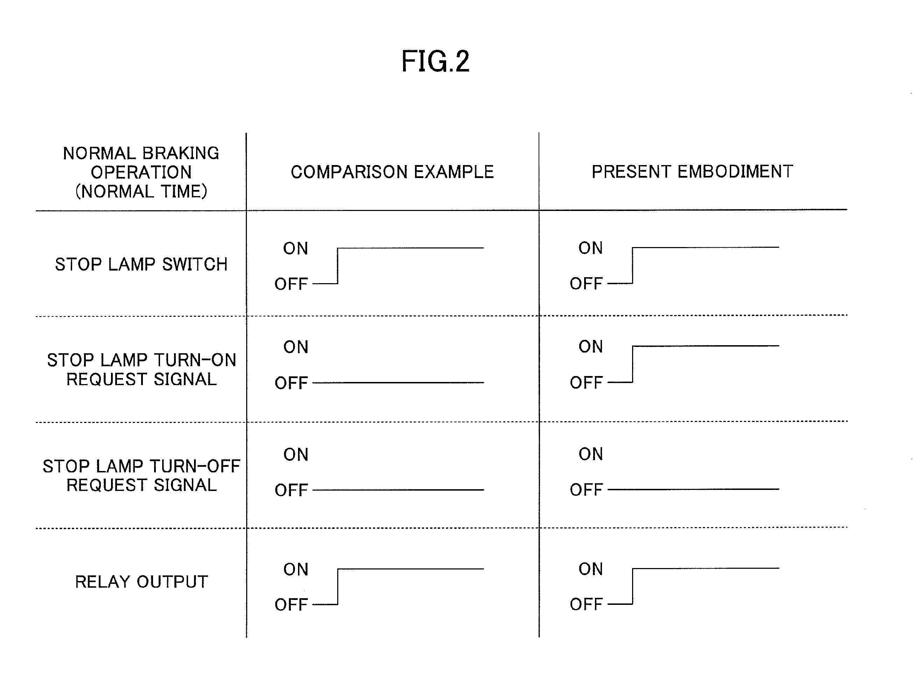

FIG. 2 shows states (waveforms) of the various signals in the comparison example and the present embodiment at a time of normal braking operation (at a time of braking operation other than sudden braking). FIG. 2 shows the respective waveforms at a normal time where the stop lamp turn-off request signal being fixed to be turned on does not occur. In this case, as shown in FIG. 2, in the comparison example, as a result of the stop lamp switch coming to have a turned-on state, the relay output is turned on and the stop lamps are turned on normally. Further, in the present embodiment, as a result of the stop lamp switch 20 coming to have a turned-on state, the stop lamp turn-on request signal comes to have a turned-on state, the relay output is turned on and the stop lamps are normally turned on.

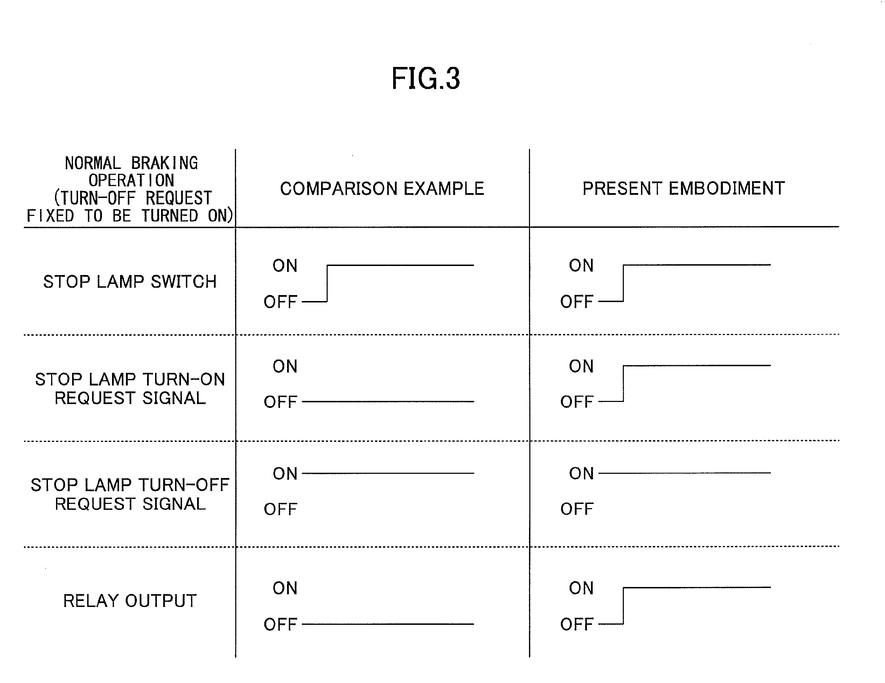

FIG. 3 shows states (waveforms) of the various signals in the comparison example and the present embodiment at a time of normal braking operation. FIG. 3 shows the respective waveforms at a time when the stop lamp turn-off request signal is fixed to be turned on (at a time of turn-off request fixed to be turned on). In this case, as shown in FIG. 3, in the comparison example, as a result of the stop lamp turn-off request signal having the turned-on state, the relay output is turned off and the stop lamps are not turned on at a time of braking operation (a lamp no-turn-on mode occurs). On the other hand, in the present embodiment, a turned-on state of the stop lamp turn-on request signal has the higher priority order than the turned-on state of the stop lamp turn-off request signal. As a result, when the stop lamp turn-on signal comes to have a turned-on state in synchronization with the stop lamp switch 20 coming to have a turned-on state, the relay output is turned on and therefore the stop lamps are turned on normally (a lamp no-turn-on mode does not occur).

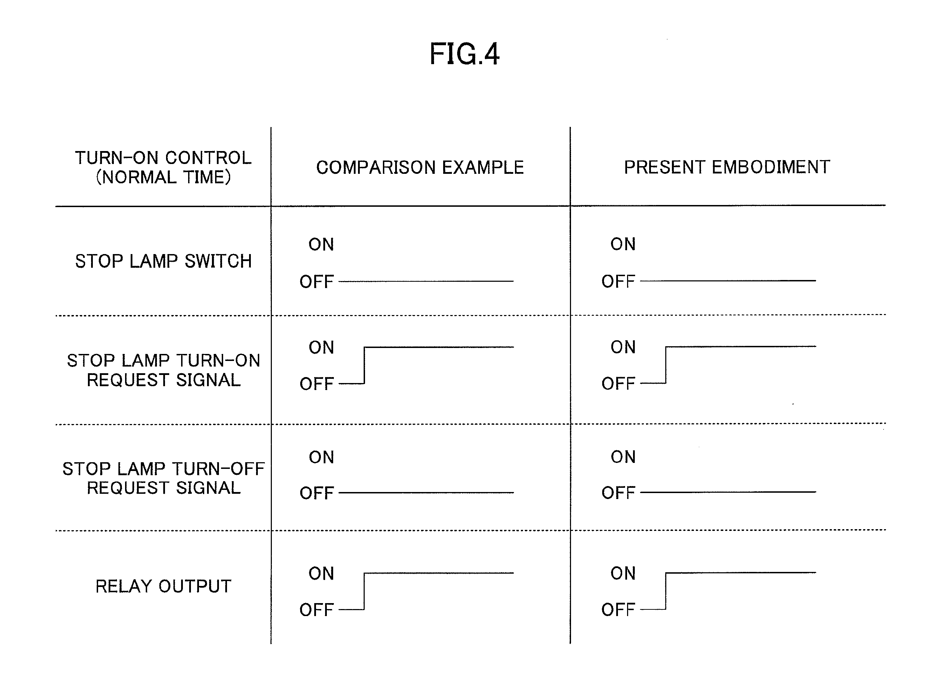

FIG. 4 shows states (waveforms) of the various signals in the comparison example and the present embodiment at a time of turn-on control. FIG. 4 shows the respective waveforms at a normal time where the stop lamp turn-off request signal being fixed to be turned on does not occur. Note that turn-on control means control of turning on the stop lamps 40 when a brake force is automatically (in a state where no braking operation is performed) generated concerning control of the brake system being automatically operated to generate a brake force such as ACC or HAC.

In this case, as shown in FIG. 4, in the comparison example, as a result of the stop lamp turn-on request signal coming to have a turned-on state, the relay output is turned on and the stop lamps are normally turned on. Further, also in the present embodiment, as a result of the stop lamp turn-on request signal coming to have a turned-on state, the relay output is turned on and the stop lamps are normally turned on.

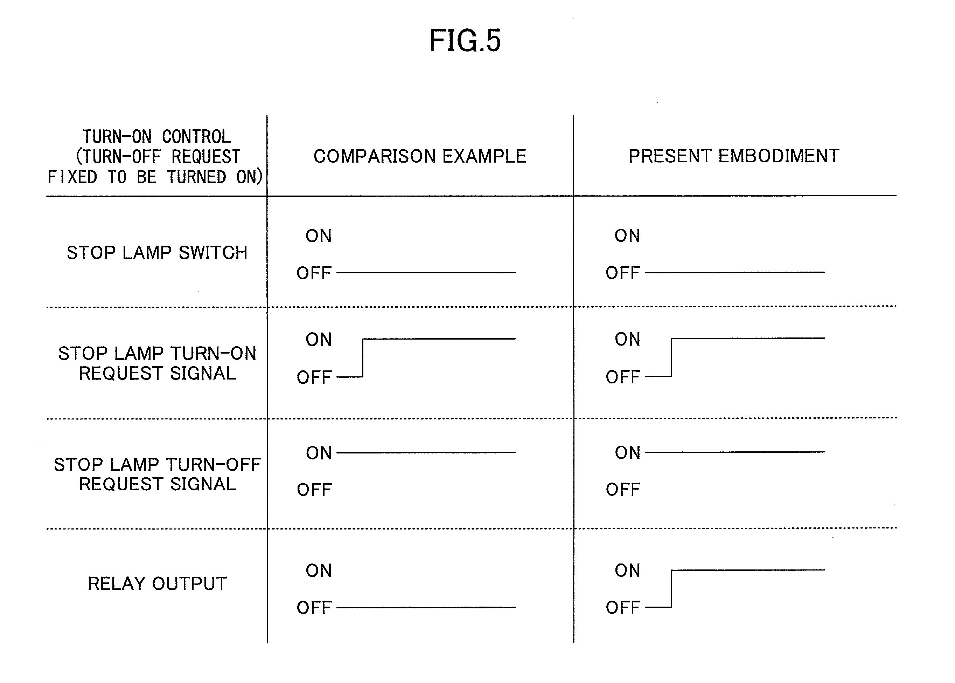

FIG. 5 shows states (waveforms) of the various signals in the comparison example and the present embodiment at a time of turn-on control. FIG. 5 shows the respective waveforms at a time when the stop lamp turn-off request signal is fixed to be turned on. In this case, as shown in FIG. 5, in the comparison example, since the turned-on state of the stop lamp turn-off request signal has the higher priority order than a turned-on state of the stop lamp turn-on request signal, the turned-on state of the stop lamp turn-off request signal turns off the relay output and the stop lamps are not turned on at a time of automatic braking operation (a lamp no-turn-on mode occurs). On the other hand, in the present embodiment, since a turned-on state of the stop lamp turn-on request signal has the higher priority order than the turned-on state of the stop lamp turn-off request signal, the turned-on state of the stop lamp turn-on request signal turns on the relay output and the stop lamps are normally turned on (a lamp no-turn-on mode does not occur).

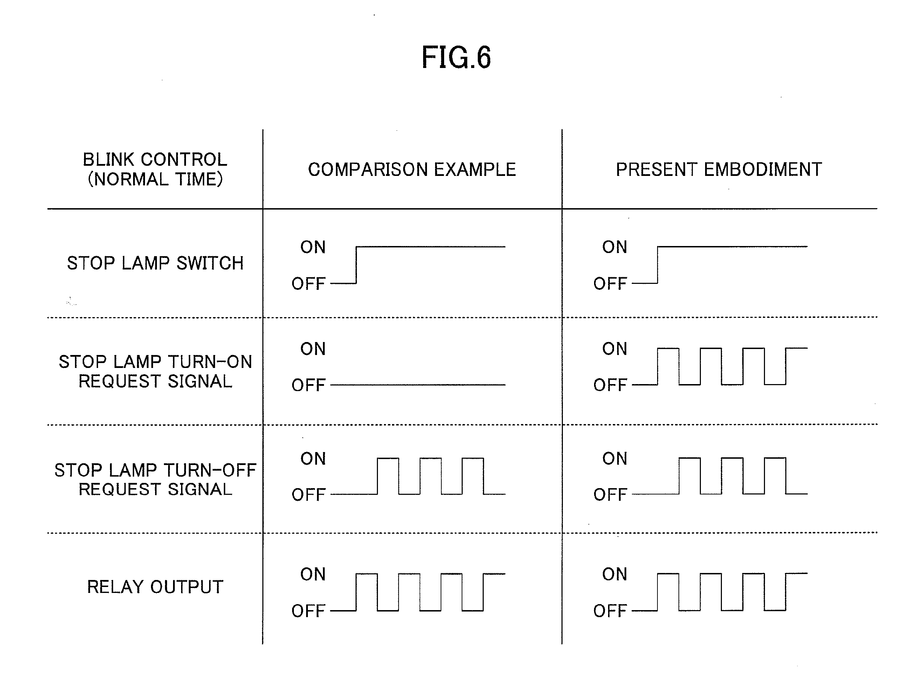

FIG. 6 shows states (waveforms) of the various signals in the comparison example and the present embodiment at a time of blink control. FIG. 6 shows the respective waveforms at a normal time where the stop lamp turn-off request signal being fixed to be turned on does not occur. Note that blink control means control of, when predetermined sudden braking is being carried out, turning on the stop lamps 40 to inform the driver of the vehicle behind and so forth of this matter.

In this case, as shown in FIG. 6, in the comparison example, during predetermined sudden braking being carried out, a turned-on state of the stop lamp switch is kept. However, a turned-on state of the stop lamp turn-off request signal has the higher priority order than a turned-on state of the stop lamp switch. Therefore, as a result of the stop lamp turn-off request signal repeating turned-on/off states alternately, the stop lamps are normally blinked. Further, in the present embodiment, during predetermined sudden braking being carried out, a turned-on state of the stop lamp switch 20 is kept. However, as a result of the stop lamp turn-off request signal and the stop lamp turn-on request signal which have the higher priority order than a turned-on state of the stop lamp switch 20 repeating turned-on/off states alternately in mutually opposite phase, the stop lamps 40 are normally blinked. That is, when the stop lamp turn-on request signal has a turned-on state, the stop lamps 40 are turned on. When the stop lamp turn-on request signal has a turned-off state, the stop lamp turn-off request signal comes to have a turned-on state and the stop lamps 40 are turned off. Repetitions thereof blink the stop lamps 40.

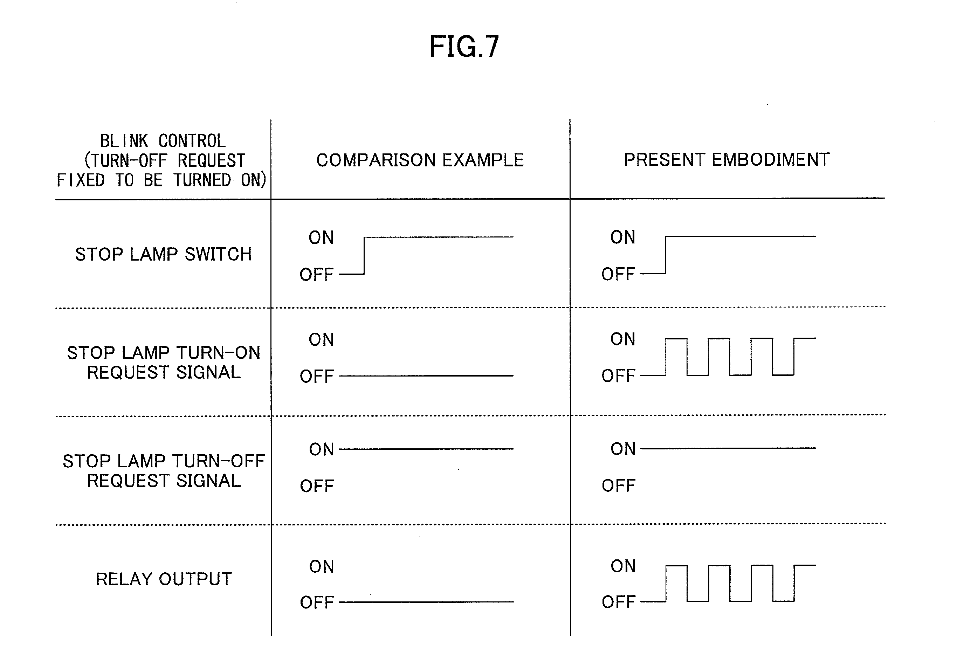

FIG. 7 shows states (waveforms) of the various signals in the comparison example and the present embodiment at a time of blink control. FIG. 7 shows the respective waveforms at a time when the stop lamp turn-off request signal is fixed to be turned on.

In this case, as shown in FIG. 7, in the comparison example, since the turned-on state of the stop lamp turn-off request signal has the higher priority order than a turned-on state of the stop lamp turn-on request signal, the relay output is turned off, and the stop lamps are not blinked (or not turned on) at a time of predetermined sudden braking (a lamp no-turn-on mode occurs). On the other hand, in the present embodiment, a turned-on state of the stop lamp turn-on request signal has the higher priority order than the turned-on state of the stop lamp turn-off request signal. Therefore, the relay output is periodically turned on and the stop lamps 40 are normally blinked (a lamp no-turn-on mode does not occur). That is, when the stop lamp turn-on request signal has a turned-on state, the stop lamps 40 are turned on. When the stop lamp turn-on request signal has a turned-off state, the stop lamp turn-off request signal has the turned-on state and the stop lamps 40 are turned off. Repetitions thereof blink the stop lamps 40.

Thus, according to the present embodiment, by appropriately giving the priority order to a turned-on state of the stop lamp turn-on request signal, a turned-on state of the stop lamp turn-off request signal and so forth while effectively using the stop lamp turn-on request signal at a time of normal braking operation or at a time of blink control, it is possible to appropriately prevent a situation that a lamp no-turn-on mode occurs due to a single failure from occurring.

Note that according to the present embodiment, a turn-on state of the stop lamp turn-on request signal has the higher priority order than a turn-on state of the stop lamp turn-off request signal. Therefore, at a time of blink control at a normal time, blinking of the stop lamps 40 can be implemented even when the stop lamp turn-off request signal is kept in a turned-on state (i.e., without having a waveform of alternately repeating turned-on/off states). However, in this case, assuming that the stop lamp turn-on request signal is fixed to be turned off, the stop lamps 40 are kept turned off and do not blink and a lamp no-turn-on mode occurs. On the other hand, when the stop lamp turn-off request signal has a waveform of alternately repeating turned-on/off states as described above, the stop lamps 40 blink normally (a lamp no-turn-on mode does not occur) even assuming that the stop lamp turn-on request signal is fixed to be turned off. That is, the stop lamps 40 are turned off due to a turned-on state of the stop lamp switch 20 when the stop lamp turn-off request signal has a turned off state. The stop lamps 40 are turned off when the stop lamp turn-off request signal has a turned-on state. Repetitions thereof blink the stop lamps 40 (a lamp no-turn-on mode does not occur). Therefore, preferably, as described above, the stop lamp turn-off request signal and the stop lamp turn-on request signal are generated in such a manner that turned-on/off states are alternately repeated in mutually opposite phases. Thereby, it is possible to appropriately prevent a situation of occurrence of a lamp no-turn-on mode even when the stop lamp turn-on request signal is fixed to be turned off.

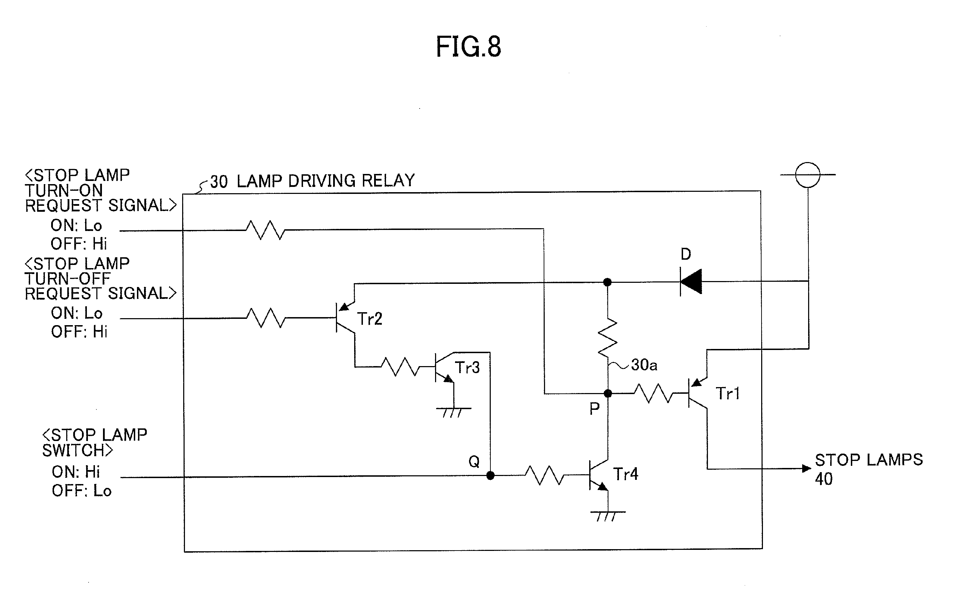

Here, according to the present embodiment, as described above, the lamp driving relay 30 generates a relay output according to the priority order, i.e., a turned-on state of the stop lamp turn-on request signal > a turned-on state of the stop lamp turn-off request signal > a turned-on state of the stop lamp switch 20, for a turned-on state of the stop lamp switch 20, a turned-on state of stop lamp turn-on request signal and a turned-on state of the stop lamp turn-off request signal. A method of implementing such a priority order is diverse. One example thereof will now be described with reference to FIG. 8. Note that in the example shown in FIG. 8, the priority order is implemented by an analog circuit. However, the property order can be implemented also by a digital circuit. Further, it is also possible to implement the priority order by software instead of a hardware circuit.

FIG. 8 shows one example of an internal configuration of the lamp driving relay 30.

As shown in FIG. 8, the lamp driving relay 30 includes four transistors Tr1 to Tr4. Note that in the example of the figure, the transistors Tr1 and Tr2 have a type of being turned off when the electric potential at the base side is Low and the transistors Tr3 and Tr4 have a type of being turned on when the electric potential at the base side is High. The stop lamps 40 are connected in such a manner as to be turned on when the transistor Tr1 is turned on and turned off when the transistor Tr1 is turned off. That is, the emitter of the transistor Tr1 is connected to a power source voltage and the stop lamps 40 are connected to the collector of the transistor Tr1.

The base of the transistor Tr1 is connected to a power line 30a at a connection point P via a resistance element. The power line 30a is formed as a result of the connection point P being connected to the power source voltage via a resistance element and a diode D.

The stop lamp turn-on request signal is directly input to the connection point P via a resistance element as shown in FIG. 8. The stop lamp turn-off request signal is directly input to the base of the transistor Tr2 via a resistance element. The collector of the transistor Tr2 is connected to the base of the transistor Tr3 via a resistance element. The emitter of the transistor Tr2 is connected to the power source voltage via the diode D. The emitter of the transistor Tr3 is grounded and the collector of the transistor Tr3 is connected to a connection point Q. The connection point Q is connected to the base of the transistor Tr4 via a resistance element. Also, the turn-on/turn-off signal of the stop lamp switch 20 is directly input to the connection point Q via a resistance element. The emitter of the transistor Tr4 is grounded and the collector of the transistor Tr4 is connected to the connection point P.

A case where the stop lamp turn-on request signal comes to have a turned-on state will be described. Here, it is assumed that the turned-on/off state of the stop lamp turn-on request signal is given to an input terminal of the lamp driving relay 30 as a signal of Low/ High level (i.e., after inversion). When the stop lamp turn-on request signal comes to have a turned-on state, the electric potential at the connection point P (the electric potential at the base side of the transistor Tr1) becomes Low, the transistor Tr1 is turned on and the stop lamps 40 are turned on.

Next, a case where the stop lamp turn-off request signal comes to have a turned-on state will be described. Here, it is assumed that the turned-on/off state of the stop lamp turn-off request signal is given to an input terminal of the lamp driving relay 30 as a signal of Low/High level (i.e., after inversion). Further, it is assumed that the stop lamp turn-on request signal has a turned-off state.

When the stop lamp turn-off request signal comes to have a turned-on state, the electric potential at the base side of the transistor Tr2 becomes Low and the transistor Tr2 is turned on. Thereby, the electric potential at the base side of the transistor Tr3 becomes High and the transistor Tr3 is turned on. Thereby, the electric potential at the connection point Q becomes the ground electric potential, the electric potential at the base side of the transistor Tr4 becomes Low and the transistor Tr4 is turned off. Thereby, the electric potential at the connection point P becomes High, the transistor Tr1 is turned off and the stop lamps 40 are turned off. Note that at this time, the electric potential at the connection point Q is the ground electric potential even when the stop lamp switch 20 has a turned-on state. Thereby, the priority order, i.e., a turned-on state of the stop lamp turn-off request signal > a turned-on state of the stop lamp switch 20, is implemented. Further, at this time, when the stop lamp turn-on request signal has a turned-on state, the electric potential at the connection point P (the electric potential at the base side of the transistor Tr1) becomes Low. Thereby, the priority order, i.e., a turned-on state of the stop lamp turn-on request signal > a turned-on state of the stop lamp turn-off request signal, is implemented. Thus, even when the stop lamp turn-off request signal is fixed to be turned on as described above, it is possible to prevent an occurrence of a lamp no-turn-on mode due to the stop lamp turn-on request signal.

Next, a case where the stop lamp switch 20 comes to have a turned-on state will be described. Here, it is assumed that the turned-on/off state of the stop lamp switch 20 is given to an input terminal of the lamp driving relay 30 as a signal of High/Low level (i.e., without inversion). Further, it is assumed that the stop lamp turn-off request signal has a turned-off state.

When the stop lamp turn-off request signal has a turned-off state, the electric potential at the base side of the transistor Tr2 has a High state and the transistor Tr2 has a turned-off state. Therefore, the electric potential at the base side of the transistor Tr3 has a Low state and the transistor Tr3 has a turned-off state. Therefore, the connection point Q has a state of not being grounded. At this time, when the stop lamp switch 20 comes to have a turned-on state, the electric potential at the connection point Q becomes High, the electric potential at the base side of the transistor Tr4 becomes High and the transistor Tr4 is turned on. Thereby, the connection point P is grounded, thereby the electric potential at the connection point P (the electric potential at the base side of the transistor Tr1) becomes Low, the transistor Tr1 is turned on and the stop lamps 40 are turned on. Note that when the stop lamp switch 20 has a turned-on state and also the stop lamp turn-off request signal has a turned-off state, the state of the connection point P being ground is formed even when the stop lamp turn-on request signal has a turned-off state. Therefore, even if the stop lamp turn-on request signal is fixed to be turned off, it is possible to turn on the stop lamps 40 due to the stop lamp switch 20. Also due to this point, an occurrence of a lamp no-turn-on mode is appropriately prevented.

Note that in the above-described embodiment, a "control apparatus" in the claims is implemented cooperatively by the lamp control ECU 10 and the lamp driving relay 30 in the embodiment. However, sharing of the functions between the lamp control ECU 10 and the lamp driving relay 30 is arbitrary, and part or all of the functions of one can be implemented by the other. Further, the functions of the lamp control ECU 10 and the lamp driving relay 30 can be cooperatively implemented by three or four control parts. Further, part or all of the functions of the lamp control ECU 10 and/or the lamp driving relay 30 can be implemented by another ECU(s). Further, the control apparatus can be implemented by any hardware or software or a combination thereof.

Although the preferable embodiment has been described above in detail, the present invention is not limited to the above-described embodiment and it is possible to carry out various modifications and replacements on the above-described embodiment without departing from the scope of the present invention.

For example, in the above-described embodiment, the turn-on control is carried out. However, the turn-on control is optional control and it is not necessary to carry out the turn-on control. That is, the present invention can also be applied to a vehicle that is not provided with an automatic braking function such as ACC or HAC. Also in this case, as a result of generating the stop lamp turn-on request signal and so forth in a similar manner at a time of normal braking or at a time of blink control, it is possible to obtain advantageous effects similar to the above-described embodiment. Further, the turn-on control accompanying an automatic braking function can be adapted also to other various systems such as a system of automatically operating an emergency brake when determining that collision with an obstacle is unavoidable (pre-crash safety system), other than ACC and HAC.

Further, in the above-described embodiment, the blink control is carried out when a sudden braking state assuming a braking operation performed by the driver is detected. However, the blink control can be carried out also for emergency intervention braking (for example, emergency braking carried out when it is determined that collision is unavoidable by a pre-crash safety system) that can be carried out as a result of a brake system being automatically operated in a state where no braking operation performed by the driver is performed.

### DESCRIPTION OF REFERENCE NUMERALS

- 1: stop lamp system
- 10: lamp control ECU
- 20: stop lamp switch
- 30: lamp driving relay
- 40: stop lamps

## Claims

1. A stop lamp system comprising a control apparatus that controls a turn-on state of a stop lamp based on a turned-on/off state of a stop lamp switch in conjunction with an operation of a brake pedal, a turned-on/off state of a stop lamp turn-on request signal and a turned-on/off state of a stop lamp turn-off request signal, the stop lamp system being **characterized in that**
when the stop lamp turn-on request signal has a turned-on state and the stop lamp turn-off request signal has a turned-on state, the control apparatus gives priority to the turned-on state of the stop lamp turn-on request signal and turns on the stop lamp.

2. The stop lamp system as claimed in claim 1, wherein
when the stop lamp switch is in a turned-on state and the stop lamp turn-off request signal is in a turned-on state, the control apparatus gives priority to the turned-on state of the stop lamp turn-off request signal and turns off the stop lamp.

3. The stop lamp system as claimed in claim 2, wherein
when predetermined sudden braking is being carried out, the control apparatus changes the stop lamp turn-on request signal between a turned-on state and a turned-off state every predetermined period of time and changes the stop lamp turn-off request signal, in a phase opposite to the stop lamp turn-on request signal, between a turned-on state and a turned-off state every same predetermined period of time.

4. The stop lamp system as claimed in any one of claims 1-3, wherein
except when predetermined sudden braking is being carried out, the control apparatus changes the stop lamp turn-on request signal into a turned-on state in synchronization with a change of the stop lamp switch into a turned-on state.

5. The stop lamp system as claimed in any one of claims 1-4, wherein
when a brake system operates without being caused by a braking operation performed by a driver, the control apparatus changes the stop lamp turn-on request signal into a turned-on state.
